(19) Europäisches Patentamt / European Patent Office / Office européen des brevets

(11) **EP 2 181 305 B1**

## (12) FASCICULE DE BREVET EUROPEEN

(45) Date de publication et mention
de la délivrance du brevet:
**09.03.2016 Bulletin 2016/10**

(21) Numéro de dépôt: **08841195.4**

(22) Date de dépôt: **14.08.2008**

(51) Int Cl.:
**G01C 19/56** (2012.01)    **G01C 25/00** (2006.01)
**G01C 19/36** (2006.01)

(86) Numéro de dépôt international:
**PCT/FR2008/001192**

(87) Numéro de publication internationale:
**WO 2009/053562 (30.04.2009 Gazette 2009/18)**

(54) **PROCEDE DE DETERMINATION D'UNE VITESSE DE ROTATION D'UN CAPTEUR VIBRANT AXISYMETRIQUE, ET DISPOSITIF INERTIEL METTANT EN OEUVRE LE PROCEDE**

VERFAHREN ZUR BESTIMMUNG DER DREHZAHL EINES ACHSENSYMMETRISCHEN VIBRIERENDEN SENSORS UND TRÄGHEITSVORRICHTUNG ZUR ANWENDUNG DIESES VERFAHRENS

METHOD FOR DETERMINING THE ROTATION SPEED OF AN AXISYMMETRIC VIBRATING SENSOR AND INERTIAL DEVICE FOR IMPLEMENTING SAID METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.08.2007 FR 0705976**

(43) Date de publication de la demande:
**05.05.2010 Bulletin 2010/18**

(73) Titulaire: **SAGEM DEFENSE SECURITE**
**92100 Boulogne Billancourt (FR)**

(72) Inventeurs:
• **CARON, Jean-Michel**
  **F-95210 Saint-gratien (FR)**

• **ROBERFROID, David**
  **F-75015 Paris (FR)**

(74) Mandataire: **Lavialle, Bruno François Stéphane et al**
**Cabinet Boettcher**
**16, rue Médéric**
**75017 Paris (FR)**

(56) Documents cités:
**EP-A- 1 445 580    EP-A1- 0 810 418**
**FR-A1- 2 755 227    US-A- 5 712 427**

## Description

La présente invention concerne un procédé de détermination d'une vitesse de rotation d'un capteur vibrant axisymétrique, et un dispositif inertiel correspondant comportant un capteur vibrant axisymétrique. L'invention concerne plus particulièrement les capteurs présentant une dérive angulaire de la position de la vibration dépendant harmoniquement de la position de la dite vibration par rapport au boîtier de l'appareil.

## ARRIERE PLAN DE L'INVENTION

On sait que, pour déterminer l'orientation d'un porteur, en particulier pour assurer la navigation d'un avion, il est possible d'utiliser un dispositif inertiel comportant un ou plusieurs capteurs vibrants axisymétriques utilisant un résonateur possédant une symétrie d'ordre égal ou supérieur à quatre et mettant en oeuvre deux modes de vibration dégénérés, identiques et orthogonaux, dont la déformée possède une périodicité d'ordre n par rapport à l'axe de symétrie, c'est-à-dire une déformée comportant n fois la même figure de vibration sur un tour autour de l'axe de symétrie. En particulier, il est connu d'utiliser des capteurs d'ordre deux tels que des capteurs vibrants à cloche hémisphérique comportant un nombre approprié d'électrodes, ou des quapasons pour lesquels les orientations de vibration des deux modes ne sont pas géométriquement orthogonales mais sont modalement orthogonales, c'est-à-dire modalement dé-calées de $\pi$.

On sait également qu'un capteur vibrant axisymétrique est adapté à fonctionner en mode gyroscopique ou en mode gyrométrique. Dans le mode gyroscopique, la vibration est entretenue mais sa position est laissée libre ; lorsque l'orientation du porteur évolue, la position de la vibration par rapport à l'embase est représentative de l'angle dont le porteur a tourné.

Dans le mode gyrométrique, la vibration est entretenue et sa position par rapport à son embase est maintenue fixe par l'envoi d'une commande électronique appropriée ; la valeur de cette commande est alors représentative de la vitesse de rotation du porteur dans l'espace inertiel.

On sait également que les gyroscopes vibrants présentent une erreur de dérive qui se traduit lorsque le gyroscope fonctionne en mode gyroscopique par une variation de la position de la vibration même lorsque le porteur n'est soumis à aucune rotation. Cette dérive comporte deux composantes, une composante constante qui, dans le cas d'un gyroscope résonant hémisphérique, est de l'ordre de quelques centièmes de degrés par heure, et une composante appelée dérive alternative qui est composée d'harmoniques, principalement d'un harmonique du même ordre n que le capteur vibrant et d'un harmonique d'ordre double de celui du capteur vibrant dépendant de la position de la vibration. Dans le cas d'un gyroscope résonant hémisphérique, l'harmonique d'ordre n engendre une erreur de dérive de l'ordre d'un degré par heure et l'harmonique d'ordre 2n engendre une erreur de dérive de l'ordre d'un dixième de degré par heure.

Il est connu d'effectuer un étalonnage des gyroscopes en atelier et d'établir des tables de correction qui peuvent être appliquées lors de l'utilisation du gyroscope. Toutefois, l'erreur de dérive est non seulement fonction de la position de la vibration mais également de la température ambiante et du vieillissement du gyroscope. En pratique les possibilités de correction sont donc limitées.

Le procédé du document EP1445580A prévoit d'appliquer un signal de commande de précession avec une fréquence double de la fréquence de résonance. Les mesures sont effectuées pour une unique position de la vibration, choisie pour obtenir une grande précision. Il s'agit d'une minimisation de l'erreur de dérive pendant l'opération du capteur.

Le document US5712427 divulgue les mécanismes responsables de l'erreur de dérive. L'erreur de facteur d'échelle est constamment calibrée grâce à la configuration des électrodes. L'erreur de dérive est minimisée après avoir complété une procédure de calibration spécifique.

Le document EP0810418 divulgue l'introduction d'une commande de précession déterminée et au même temps une mesure de la vitesse de rotation ayant comme but la détermination d'un modèle d'erreur de la dérive. Ceci implique une courte interruption de l'utilisation normale du gyroscope.

Le document FR2755227 divulgue des moyens pour effectuer des commandes de précession permettant un calibrage périodique.

## OBJET DE L'INVENTION

Un but de l'invention est de déterminer la vitesse de rotation d'un capteur vibrant axisymétrique en minimisant l'erreur de dérive.

## RESUME DE L'INVENTION

En vue de la réalisation de ce but, on propose selon l'invention un procédé de détermination d'une vitesse de rotation d'un capteur vibrant axisymétrique ayant un organe vibrant associé à des électrodes de commande et des électrodes de détection pour générer une vibration ayant une déformée possédant une périodicité d'ordre n et ayant une position variable en fonction de la rotation du capteur. Le procédé comporte les étapes :

- d'effectuer une évaluation de la vitesse de rotation successivement pour un nombre N de positions de la vibration par rapport aux électrodes, les positions étant géométriquement décalées d'un angle prédéterminé et la vibration étant déplacée d'une position à l'autre par application d'une commande de précession en utilisant un facteur d'échelle préétabli,
- d'effectuer une moyenne des évaluations de la vitesse de rotation dans les N positions,

le nombre N de positions et l'angle séparant les positions étant tels que la moyenne des évaluations permette d'éliminer au moins une composante de l'erreur de dérive harmonique de la vibration.

L'erreur résultant des harmoniques est liée à leur amplitude et la phase des harmoniques dépend de la position de la vibration. Ainsi, il est possible, en moyennant des évaluations de la vitesse pour plusieurs positions d'éliminer les effets des harmoniques en utilisant des positions pour lesquelles la somme des amplitudes sera nulle en tenant compte de la phase des harmoniques en ces positions, par exemple des positions dans lesquelles les harmoniques ont la même amplitude en valeur absolue mais sont en opposition de phase. L'erreur de dérive est donc minimisée quels que soient la température et le degré de vieillissement du capteur.

De préférence, l'évaluation de la vitesse est réalisée pour N positions de la vibration, les écarts angulaires entre les positions étant liés au nombre N de positions et à l'ordre n de la déformée modale de la vibration selon la formule : écart angulaire entre les positions = $2\pi/Nn$.

Ainsi, l'écart angulaire entre deux positions consécutives parmi N positions vaut :

- $\pi/n$ pour N=2
- $2\pi/3n$ pour N=3
- $\pi/2n$ pour N=4
- etc... ..

Selon un mode de réalisation particulier, l'évaluation de la vitesse est réalisée pour deux positions de la vibration, à savoir une première position et une deuxième position décalée d'un angle $\pi/n$ par rapport à la première position.

On supprime ainsi les effets de l'harmonique d'ordre n. Pour deux positions de la vibration décalée de $\pi/n$, l'harmonique d'ordre n a une amplitude de même valeur absolue mais de signes opposés de sorte qu'en effectuant une moyenne des évaluations selon deux positions géométriquement décalées de $\pi/n$, le décalage modal est de $\pi$, de sorte que les amplitudes de l'erreur due à l'harmonique d'ordre n s'éliminent.

Selon un aspect avantageux de ce mode de réalisation de l'invention, l'évaluation de la vitesse est réalisé pour deux positions supplémentaires de la vibration, à savoir des positions géométriquement décalées de $\pi/2n$ et de $3\pi/2n$ par rapport à la première position.

Ainsi, on élimine non seulement les effets de l'harmonique notamment d'ordre $n$, mais également ceux de l'harmonique d'ordre 2n. En effet, entre une position géométriquement décalée de $\pi/2n$ et une position géométriquement décalée de $3\pi/2n$, le décalage modal est de $\pi$ de sorte que l'harmonique d'ordre n se trouve éliminé de la même façon que précédemment. En outre, pour la position initiale et la position géométriquement décalée de $\pi/n$ l'harmonique d'ordre 2n engendre une erreur de dérive de même amplitude et de même signe mais pour les positions géométriquement décalées de $\pi/2n$ et de $3\pi/2n$, l'harmonique d'ordre 2n engendre des erreurs de dérive de même amplitude et de signe opposé à l'erreur de dérive de la position initiale. En effectuant une moyenne des quatre évaluations on élimine donc l'erreur due à l'harmonique d'ordre 2n.

Selon un deuxième mode de réalisation, l'évaluation de la vitesse est réalisé pour trois positions de la vibration, à savoir une première position, une deuxième position décalée d'un angle $2\pi/3n$ par rapport à la première position et une troisième position décalée de $4\pi/3n$ par rapport à la première position.

L'utilisation de trois positions permet, selon le même principe que précédemment, l'élimination notamment des harmoniques d'ordre n et 2n.

Grâce à l'invention, le défaut de dérive résiduel est ainsi faible et dû à la composante constante ainsi qu'à des harmoniques de rang plus élevés ayant une amplitude relativement faible. Ce défaut pourra alors être compensé lors de la calibration initiale du dispositif et seules les évolutions d'une valeur initialement faible et compensée viendront perturber la mesure de vitesse de rotation du dispositif.

Les défauts de linéarité générés par les codeurs électroniques utilisés pour la mesure de la position angulaire de la vibration étant maximaux pour des valeurs d'entrée nulles, on pourra choisir les angles servant à la mesure de la vitesse de rotation en évitant les valeurs nulles de sortie des électrodes de détection (signaux d'entrée des codeurs angulaires).

D'une manière générale, le moyennage sur N positions permet d'éliminer toutes les harmoniques sauf celles de rang 2kN, k étant un entier quelconque.

Dans le cas particulier du gyroscope vibrant hémisphérique utilisé avec une déformée d'ordre deux, c'est-à-dire $n=2$ :

- le choix de deux positions angulaires $\Theta 0$ et $\Theta 2=\Theta 0+90°$ permet d'éliminer les harmoniques de rang 2, 6, 10, 14, 18, 20,
- le choix de trois positions angulaires $\Theta 0$, $\Theta 4=\Theta 0+60°$ et $\Theta 5=\Theta 0+120°$ permet d'éliminer les harmoniques de rang 2, 4, 8, 10, 14, 16, 20,
- le choix de quatre positions angulaires $\Theta 0$, $\Theta 1=\Theta 0+45°$, $\Theta 2=\Theta 0+90°$, et $\Theta 3=\Theta 0+135°$ permet d'éliminer les harmoniques de rang 2, 4, 6, 10, 12, 14, 18, 20.

On notera que le choix de trois positions est particulièrement judicieux puisqu'avec un nombre réduit de positions il permet d'éliminer les harmoniques 2 et 4 qui sont prépondérants dans la dérive alternative et un plus grand nombre d'harmoniques d'importance secondaire.

Il convient par ailleurs de remarquer que l'invention décrite attribue par principe l'écart de mesure de vitesse de rotation entre les diverses positions de la vibration à la dérive harmonique du résonateur : il est donc nécessaire que la vitesse de rotation appliquée au capteur soit constante pendant l'ensemble des mesures, faute de quoi l'annulation des termes harmoniques de dérive ne pourra pas être réalisée. En fait, la contrainte réelle est de connaître l'écart de vitesse de rotation entre les périodes de temps correspondant aux mesures, la vitesse constante n'étant que le cas particulier où cet écart est nul.

L'invention a également pour objet un dispositif inertiel pour la mise en oeuvre du procédé de l'invention. Ce dispositif inertiel comprend un capteur vibrant axisymétrique, ayant un organe vibrant associé à des électrodes de commande et des électrodes de détection, des moyens pour exciter le capteur de façon à générer une vibration, des moyens pour effectuer une évaluation de la vitesse de rotation du capteur pour chacune de N positions de la vibration par rapport aux électrodes, les positions étant géométriquement décalées d'un angle predeterminé, des moyens pour appliquer des commandes de précession en utilisant un facteur d'échelle préétabli jusqu'à ce que la vibration atteigne chacune des N positions, et des moyens pour effectuer une moyenne entre les évaluations de la vitesse de rotation du capteur dans les N positions de la vibration, le nombre N de positions et l'angle séparant les positions étant tels que la moyenne des évaluations permette d'éliminer au moins une composante de l'erreur de dérive harmonique de la vibration.

BREVE DESCRIPTION DES DESSINS

D'autres caractéristiques et avantages de l'invention apparaîtront à la lecture de la description qui suit d'un mode de mise en oeuvre particulier non limitatif de l'invention en référence aux figures ci-jointes parmi lesquelles :

- la figure 1 est une vue en coupe axiale schématique selon la ligne I-I de la figure 2 d'un capteur vibrant à cloche hémisphérique,
- la figure 2 est une vue en coupe selon la ligne II-II de la figure 1,
- la figure 3 est un schéma par blocs illustrant un exemple de mise en oeuvre du procédé de l'invention et de ses différentes applications,
- la figure 4 est un schéma illustrant l'amplitude de l'harmonique d'ordre deux et de l'harmonique d'ordre quatre en fonction de la position de la vibration par rapport à une électrode de référence,
- la figure 5 est une représentation schématique du globe terrestre et d'un capteur vibrant illustrant l'application de l'invention pour la recherche du nord.

DESCRIPTION DETAILLEE DE L'INVENTION

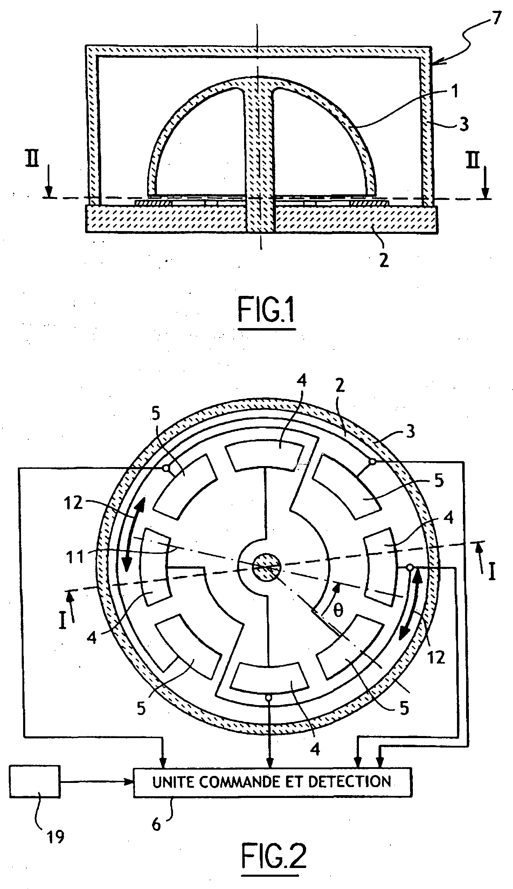

En référence aux figures 1 et 2, le dispositif inertiel selon l'invention est illustré avec un capteur vibrant avec une déformée d'ordre deux. Le dispositif comporte un capteur vibrant 7 à cloche hémisphérique comprenant de façon connue en soi une cloche en silice 1 montée sur une embase 2 également en silice, la cloche 1 étant entourée d'un boîtier étanche 3 permettant de mettre le capteur sous vide.

Egalement de façon connue en soi, la surface interne de la cloche 1 est métallisée ainsi que son bord inférieur et celui-ci s'étend en regard de deux paires d'électrodes de commande 4 et de deux paires d'électrodes de détection 5 convenablement reliées à une unité de commande et de détection 6 pour générer une vibration 11 illustrée par un trait mixte sur la figure 2 et dont la position est repérée par un angle $\Theta$ par rapport à une électrode de référence 5. La position de la vibration 11 est commandée par l'unité de commande 6 en appliquant aux électrodes de commande 4 une commande de précession.

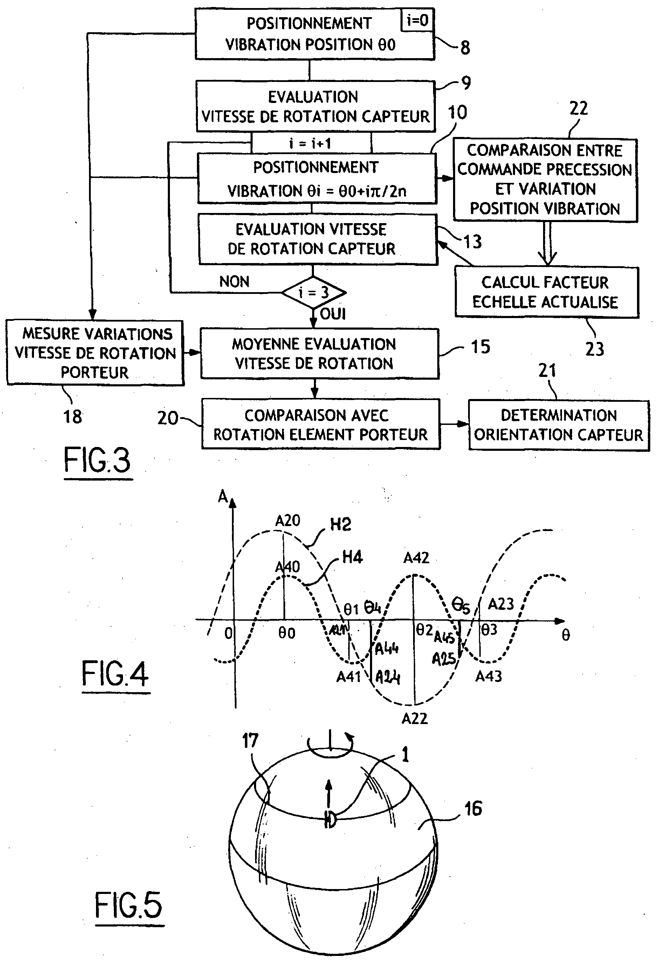

En référence à la figure 3, le mode de mise en oeuvre préféré du procédé selon l'invention comporte une première étape 8 de positionnement de la vibration dans une première position $\Theta 0$.

Pour la première position $\Theta 0$ de la vibration, le procédé comporte une étape 9 d'évaluation de la vitesse de rotation du capteur. Cette évaluation de la vitesse de rotation est effectuée en utilisant de façon connue en soi le gyroscope selon un mode gyroscopique, ou selon un mode gyrométrique.

Dans le cas d'un mode gyroscopique, une série de mesures de la position de la vibration est effectuée dans un temps bref pendant lequel le déplacement de la vibration est faible par rapport à la période des harmoniques d'ordre deux et d'ordre quatre. En particulier, dans l'application où le procédé est mis en oeuvre pour la recherche du nord, le gyroscope est de préférence immobile par rapport à la surface terrestre, de sorte que la vitesse de rotation maximale du gyroscope est celle de la rotation terrestre, c'est-à-dire une vitesse de rotation de 15°/h. Pour une mesure de la vitesse de rotation du capteur effectuée en mode gyroscopique pendant dix secondes, la variation de position de la vibration est donc totalement négligeable.

Pour éviter toute variation de position de la vibration et pour permettre d'éviter des erreurs dues au défaut de codage de la position de la vibration, il est préférable, pour des faibles vitesses de rotation, d'effectuer une évaluation en mode gyrométrique bien que le facteur d'échelle soit moins précis que dans le mode gyroscopique.

Il est ensuite procédé à une étape de modification 10 de la position de la vibration en appliquant une commande de précession aux électrodes de commande 4, puis à une évaluation 13 de la vitesse de rotation du capteur dans la position modifiée. Dans le premier mode de mise en oeuvre préféré, la vibration est placée dans trois positions 14 modifiées $\Theta 1$, $\Theta 2$ et $\Theta 3$ respectivement décalées géométriquement de la position initiale $\Theta 0$ pour être positionnée selon des angles $\Theta i = \Theta 0 + i\pi/2n$ où i est un entier compris entre 1 et 3, soit pour $n=2$ des décalages de 45°, 90° et 135°.

Une moyenne 15 est ensuite réalisée entre les différentes évaluations de vitesse de rotation du capteur. Comme illustré par la figure 4, l'amplitude A22 de l'harmonique d'ordre 2 pour la position $\Theta 2$ décalée de 90° par rapport à la position initiale $\Theta 0$ est égale en valeur absolue et de signe opposé à l'amplitude A20 de l'harmonique d'ordre deux dans la position $\Theta 0$.

De même, l'amplitude A23 de l'harmonique d'ordre deux pour la position $\Theta 4$ de la vibration est de même valeur mais de signe opposé à l'amplitude A21 de l'harmonique d'ordre deux pour la position $\Theta 1$. Lors de l'établissement de la moyenne, les erreurs de dérive dues à l'harmonique deux s'annulent donc deux à deux.

En ce qui concerne l'harmonique d'ordre quatre, les amplitudes A41 et A43 pour les positions selon les angles $\Theta 1$ et $\Theta 3$ sont de même valeur et de signe opposé aux amplitudes A40 et A42 pour les positions de la vibration aux angles $\Theta 0$ et $\Theta 2$. Lors de l'établissement de la moyenne ces quatre valeurs se compensent.

Dans le deuxième mode de mise en oeuvre préféré, la vibration est placée dans deux positions modifiées $\Theta 4$, $\Theta 5$ respectivement décalées géométriquement de la position initiale $\Theta 0$ pour être positionnée selon des angles $\Theta 4 = \Theta 0 + \pi/3$ et $\Theta 5 = \Theta 0 + 2\pi/3$, soit pour des décalages de 60° et 120°.

Comme précédemment, une évaluation de la vitesse de rotation du capteur est effectuée pour chacune des positions $\Theta 0$, $\Theta 4$, $\Theta 5$ et une moyenne est ensuite réalisée entre les différentes évaluations de vitesse de rotation du capteur. Comme illustré par la figure 4, l'harmonique d'ordre deux aux positions $\Theta 4$, $\Theta 5$ est de signe opposé par rapport à la position $\Theta 0$ et la somme des amplitudes A24 et A25 de l'harmonique d'ordre deux pour les positions $\Theta 4$ et $\Theta 5$ égale en valeur absolue l'amplitude A20 de l'harmonique d'ordre deux dans la position $\Theta 0$. La somme des amplitudes A20, A24, A25 est donc nulle. De même, l'harmonique d'ordre quatre aux positions $\Theta 4$, $\Theta 5$ est de signe opposé par rapport à la position $\Theta 0$ et la somme des amplitudes A44 et A45 de l'harmonique d'ordre quatre pour les positions $\Theta 4$ et $\Theta 5$ égale en valeur absolue l'amplitude A40 de l'harmonique d'ordre quatre dans la position $\Theta 0$. La somme des amplitudes A40, A44, A45 est donc nulle.

Lors de l'établissement de la moyenne, les erreurs de dérive dues aux harmoniques deux et quatre s'annulent.

En fait, dans ces deux modes de réalisation des harmoniques d'ordre plus élevé sont également éliminés de la même manière que pour les harmoniques d'ordres deux et quatre.

Ainsi :

- le choix de deux positions angulaires $\Theta 0$ et $\Theta 2 = \Theta 0 + 90°$ permet d'éliminer les harmoniques de rang 2, 6, 10, 14, 18, 20,
- le choix de trois positions angulaires $\Theta 0$, $\Theta 4 = \Theta 0 + 60°$ et $\Theta 5 = \Theta 0 + 120°$ permet d'éliminer les harmoniques de rang 2, 4, 8, 10, 14, 16, 20,
- le choix de quatre positions angulaires $\Theta 0$, $\Theta 1 = \Theta 0 + 45°$, $\Theta 2 = \Theta 0 + 90°$ et $\Theta 3 = \Theta 0 + 135°$ permet d'éliminer les harmoniques de rang 2, 4, 6, 10, 12, 14, 18, 20.

Dans les deux modes de réalisation, la position initiale peut être choisie compte tenu des positions décalées pour que dans chacune des positions le signal de détection correspondant ait une valeur non nulle pour des raisons de qualité de conversion du signal analogique fourni par les électrodes de détection 5 en un signal numérique.

A titre d'exemple, pour une dynamique de précession de 5°/s, il faut compter environ dix secondes pour modifier la position de la vibration de 45°. Il faut compter en outre une quinzaine de secondes pour effectuer l'évaluation de la vitesse de rotation pour une position donnée. Dans le cas d'une évaluation dans quatre positions, il faut donc compter un temps d'évaluation total de l'ordre de cent secondes. Ce temps peut être réduit au dépend d'une légère perte de précision en effectuant une évaluation pour deux positions seulement, une première évaluation correspondant à la première position $\Theta 0$ et une deuxième évaluation correspondant à la deuxième position $\Theta 2$ décalée de 90° par rapport à la première position. Dans ce cas, l'erreur due à l'harmonique d'ordre deux est éliminée tandis que l'erreur due à l'harmonique d'ordre quatre est maintenue. Il faut toutefois noter à ce propos que contrairement à la représentation qui est faite sur la figure 4 sur laquelle l'harmonique d'ordre quatre a volontairement été exagérée pour une meilleure compréhension, l'harmonique d'ordre quatre a une amplitude beaucoup plus faible que l'harmonique d'ordre deux. Pour un gyroscope résonant hémisphérique, l'harmonique d'ordre deux peut induire une dérive de l'ordre de un degré par heure tandis que l'harmonique d'ordre quatre peut induire une dérive de l'ordre de un dixième de degré par heure.

On notera à ce propos que les amplitudes des harmoniques d'ordre deux et d'ordre quatre ne se compensent directement qu'à condition que la vitesse de rotation du gyroscope soit constante pendant la durée des mesures servant à l'évaluation de la vitesse de rotation.

Lorsque la vitesse de rotation du gyroscope n'est pas constante il reste néanmoins possible de tirer profit de l'invention. Dans ce cas il suffit de disposer d'un moyen pour effectuer une mesure 18 des variations de la vitesse de rotation et d'effectuer une déduction algébrique de ces variations de l'évaluation de vitesse de rotation qui est faite dans chaque position. Ces étapes sont par exemple mises en oeuvre par un gyroscope à écart 19 relié à l'unité de commande et de détection 6 en parallèle au capteur vibrant 7. Le gyroscope à écart 19 présente une mauvaise précision pour une mesure absolue de la vitesse mais une bonne précision pour mesurer des écarts sur un temps très court.

Le gyroscope à écart 19 est de préférence mis en oeuvre en faisant une intégration des variations mesurées sur les mêmes périodes de temps qu'une intégration de la vitesse de rotation mesurée avec le capteur vibrant. La moyenne donnant l'évaluation finale de la vitesse de rotation est alors obtenue très simplement en faisant la somme des intégrales et en divisant par le temps total des mesures de la vitesse de rotation.

Le procédé selon l'invention permet en particulier d'améliorer la mise en oeuvre des applications utilisant une évaluation d'une vitesse de rotation constante, en particulier la recherche du Nord ou un alignement par rapport à un élément de référence.

Les figures 3 et 5 illustrent une application à la recherche du Nord lorsque le dispositif inertiel contenant le capteur vibrant 1 est immobile par rapport au globe terrestre 16. Compte tenu de la rotation de la terre autour de l'axe Nord-Sud, un capteur vibrant 1 dont l'axe de symétrie s'étend parallèlement à une tangente au parallèle 17 passant par le capteur, c'est-à-dire selon une direction Est-Ouest, ne perçoit aucune rotation. A partir d'une orientation pour laquelle le capteur est soumis à une vitesse de rotation non nulle, le procédé mettant en oeuvre cette application comprend de façon connue en soi une étape de comparaison 20 de la vitesse de rotation du capteur avec la vitesse de rotation de l'élément de référence, c'est-à-dire la rotation du globe terrestre dans le cas d'un porteur au sol, et une étape 21 de détermination de l'orientation du capteur par application de formules trigonométriques donnant la composante de rotation du capteur vibrant en fonction de son orientation. La précision d'évaluation de la vitesse de rotation obtenue avec le procédé selon l'invention permet de mettre en oeuvre cette application avec une précision améliorée pour la détermination du Nord. Afin d'obtenir la meilleure précision de la détermination du Nord l'axe de symétrie du gyroscope est de préférence placé approximativement selon une direction Est-Ouest.

Dans le cas d'un alignement du dispositif inertiel avant une navigation, le dispositif inertiel comprend de préférence trois capteurs vibrants dont les axes sont disposés selon des directions orthogonales.

Selon encore un autre aspect de l'invention, la modification de la position de la vibration pour l'évaluation de la vitesse de rotation donne l'occasion d'effectuer une comparaison 22 entre la commande de précession et la variation de la position de la vibration et d'effectuer un calcul 23 du facteur d'échelle actualisé qui peut immédiatement servir à l'évaluation de la vitesse de rotation du capteur vibrant.

Les différentes étapes du procédé de l'invention sont de préférence mises en oeuvre par des logiciels intégrés à l'unité de commande 6 qui forme un dispositif inertiel avec le capteur vibrant.

Bien entendu, l'invention n'est pas limitée aux modes de mise en oeuvre décrits et est susceptible de variantes de réalisation qui apparaîtront à l'homme du métier sans sortir du cadre de l'invention tel que défini par les revendications.

En particulier, bien que les applications aient été décrites pour un capteur vibrant immobile par rapport au sol, le procédé selon l'invention peut également être utilisé lorsque le dispositif inertiel est installé dans un porteur mobile par rapport au sol.

Bien que l'invention ait été décrite en relation avec un gyroscope d'ordre deux (n=2), elle s'applique également à un gyroscope d'ordre plus élevé. Dans ce cas, les écarts angulaires entre les positions, qui dépendent du nombre de positions et de l'ordre n de la déformée modale de la vibration, auront pour valeur $2\pi/Nn$, soit :

- $\pi/n$ pour N=2
- $2\pi/3n$ pour N=3
- $\pi/2n$ pour N=4
- etc.....

**Revendications**

1. Procédé de détermination d'une vitesse de rotation d'un capteur vibrant axisymétrique (7) ayant un organe vibrant (1) associé à des électrodes de commande (4) et des électrodes de détection (5) pour générer une vibration ayant une déformée possédant une périodicité d'ordre n et ayant une position (Θ) variable en fonction de la rotation du capteur, **caractérisé en ce qu'**il comporte les étapes :

   - d'effectuer une évaluation de la vitesse de rotation successivement pour un nombre N de positions de la vibration par rapport aux électrodes, les positions étant géométriquement décalées d'un angle prédéterminé et la vibration étant déplacée d'une position à l'autre par application d'une commande de précession en utilisant un facteur d'échelle préétabli,
   - d'effectuer une moyenne (15) des évaluations de la vitesse de rotation dans les N positions, le nombre N de positions et l'angle séparant les positions étant tels que la moyenne des évaluations permette d'éliminer au moins une composante de l'erreur de dérive harmonique de la vibration.

2. Procédé selon la revendication 1, dans lequel les écarts angulaires entre les positions sont liés au nombre N de positions et à l'ordre n de la déformée modale de la vibration selon la formule : écart angulaire entre les positions = $2\pi/Nn$.

3. Procédé selon la revendication 1, dans lequel l'évaluation de la vitesse est réalisée pour deux positions de la vibration, à savoir une première position (Θ0) et une deuxième position décalée d'un angle $\pi/n$ par rapport à la première position.

4. Procédé selon la revendication 2, dans lequel l'évaluation de la vitesse est réalisée pour deux positions supplémentaires de la vibration, à savoir des positions géométriquement décalées de $\pi/2n$ et de $3\pi/2n$ par rapport à la première position.

5. Procédé selon la revendication 1, dans lequel l'évaluation de la vitesse est réalisée pour trois positions de la vibration, à savoir une première position (Θ0), une deuxième position décalée d'un angle $2\pi/3n$ par rapport à la première position et une troisième position décalée de $4\pi/3n$ par rapport à la première position.

6. Procédé selon tout ou partie des revendications précédentes, **caractérisé en ce qu'**il comporte l'étape préalable de commander le positionnement de la vibration selon des angles choisis pour qu'un signal de détection correspondant ait une valeur non nulle.

7. Procédé selon tout ou partie des revendications précédentes, **caractérisé en ce qu'**il comporte les étapes :

   - d'effectuer une comparaison (22) entre la commande de précession et une variation d'angle effectif correspondante,
   - et d'en déduire une valeur actualisée (23) du facteur d'échelle.

8. Procédé selon tout ou partie des revendications précédentes, **caractérisé en ce qu'**il comporte les étapes de :

   - mesurer (18) des variations de la vitesse de rotation du capteur et
   - effectuer une déduction algébrique des variations mesurées lors de l'établissement de la moyenne des évaluations de vitesses de rotation.

9. Dispositif inertiel comprenant un capteur vibrant axisymétrique (7), ayant un organe vibrant (1) associé à des électrodes de commande (4) et des électrodes de détection (5), des moyens (6) pour exciter le capteur de façon à générer une vibration, **caractérisé en ce qu'**il comporte des moyens pour effectuer une évaluation (9) de la vitesse de rotation du capteur pour chacune de N positions de la vibration par rapport aux électrodes, les positions étant géométriquement décalées d'un angle prédéterminé, des moyens pour appliquer des commandes de précession (10) en utilisant un facteur d'échelle préétabli jusqu'à ce que la vibration atteigne chacune des N positions, et des moyens pour effectuer une moyenne (15) entre les évaluations de la vitesse de rotation du capteur dans les N positions de la vibration, le nombre N de positions et l'angle séparant les positions étant tels que la moyenne des évaluations permette d'éliminer au moins une composante de l'erreur de dérive harmonique de la vibration.

10. Dispositif selon la revendication 9, dans lequel les écarts angulaires entre les positions sont liés au nombre N de positions et à l'ordre n de la déformée modale de la vibration selon la formule : écart angulaire entre les positions = $2\pi/Nn$.

**11.** Dispositif selon la revendication 10, dans lequel l'évaluation est effectuée pour deux positions, à savoir une première position ($\theta 0$) et une deuxième position décalée de $\pi/n$ par rapport à la première position.

**12.** Dispositif selon la revendication 11, dans lequel l'évaluation est effectuée pour deux positions supplémentaires décalées de $\pi/2n$ et de $3\pi/2n$ par rapport à la première position.

**13.** Dispositif selon la revendication 12, dans lequel l'évaluation est effectuée pour trois positions, à savoir une première position ($\theta 0$) et une deuxième et une troisième positions décalées respectivement de $3\pi/2n$ et $4\pi/3n$ par rapport à la première position.

**14.** Dispositif selon la revendication 9, **caractérisée en ce qu'**il comporte :

- des moyens pour effectuer une comparaison (22) entre chaque commande de précession et une variation d'angle effectif correspondante,
- et des moyens pour déduire une valeur actualisée (23) du facteur d'échelle.

**15.** Dispositif selon la revendication 9, **caractérisé en ce qu'**il comporte :

- des moyens (19) pour mesurer des variations de la vitesse de rotation du capteur et
- des moyens pour effectuer une déduction algébrique des variations mesurées lors de l'établissement de la moyenne des évaluations de vitesses de rotation.

**Patentansprüche**

**1.** Verfahren zur Bestimmung einer Drehgeschwindigkeit eines achsensymmetrischen schwingenden Sensors (7), der ein schwingendes Organ (1) hat, das mit Steuerelektroden (4) und Erfassungselektroden (5) verbunden ist, um eine Schwingung zu erzeugen, die eine Verformung hat, die eine Periodizität n-ter Ordnung besitzt und eine in Abhängigkeit von der Drehung des Sensors variable Position ($\Theta$) hat, **dadurch gekennzeichnet, dass** es die Schritte umfasst:

- Durchführen einer Ermittlung der Drehgeschwindigkeit nacheinander für eine Anzahl N von Positionen der Schwingung relativ zu den Elektroden, wobei die Positionen geometrisch um einen vorgegebenen Winkel versetzt sind und die Schwingung von einer Position zur anderen durch Anwendung einer Präzessionsteuerung unter Verwendung eines vorher festgelegten Skalenfaktors verschoben wird,
- Bilden eines Mittelwertes (15) der Ermittlungen der Drehgeschwindigkeit in den N Positionen,

wobei die Anzahl N von Positionen und der Winkel, der die Positionen trennt, derart sind, dass der Mittelwert der Ermittlungen es erlaubt, mindestens eine Komponente des Driftfehlers einer Harmonischen der Schwingung zu eliminieren.

**2.** Verfahren nach Anspruch 1, wobei die Winkelabstände zwischen den Positionen mit der Anzahl N von Positionen und der n-ten Ordnung der modalen Verformung der Schwingung gemäß der Formel in Zusammenhang stehen: Winkelabstand zwischen den Positionen = $2\pi/Nn$.

**3.** Verfahren nach Anspruch 1, wobei die Ermittlung der Geschwindigkeit für zwei Positionen der Schwingung durchgeführt wird, nämlich einer ersten Position ($\Theta 0$) und einer zweiten Position, die gegenüber der ersten Position um einen Winkel $\pi/n$ versetzt ist.

**4.** Verfahren nach Anspruch 2, wobei die Ermittlung der Geschwindigkeit für zwei zusätzliche Positionen der Schwingung durchgeführt wird, nämlich Positionen, die gegenüber der ersten Position um $\pi/2n$ und 3n/2n geometrisch versetzt sind.

**5.** Verfahren nach Anspruch 1, wobei die Ermittlung der Geschwindigkeit für drei Positionen der Schwingung durchgeführt wird, nämlich einer ersten Position ($\Theta 0$), einer zweiten Position, die gegenüber der ersten Position um einen Winkel von 2n/3n versetzt ist, und einer dritten Position, die gegenüber der ersten Position um 4π/3n versetzt ist.

6. Verfahren nach allen oder einem Teil der vorhergehenden Ansprüche, **dadurch gekennzeichnet, dass** es den vorhergehenden Schritt des Steuerns der Positionierung der Schwingung gemäß gewählten Winkeln umfasst, damit ein entsprechenden Erfassungssignal einen Wert von ungleich Null hat.

7. Verfahren nach allen oder einem Teil der vorhergehenden Ansprüche, **dadurch gekennzeichnet, dass** es die Schritte umfasst:

   - Durchführen eines Vergleichs (22) zwischen der Präzessionssteuerung und einer entsprechenden Ist-Winkelveränderung,
   - und daraus Herleiten eines aktualisierten Wertes (23) des Skalenfaktors.

8. Verfahren nach allen oder einem Teil der vorhergehenden Ansprüche, **dadurch gekennzeichnet, dass** es die Schritte umfasst:

   - Messen (18) der Veränderungen der Drehgeschwindigkeit des Sensors, und
   - Durchführen einer algebraischen Deduktion der Veränderungen, die beim Bilden des Mittelwertes der Drehgeschwindigkeitsermittlungen gemessen werden.

9. Trägheitsvorrichtung, umfassend einen achsensymmetrischen schwingenden Sensor (7), der ein schwingendes Organ (1) hat, das mit Steuerelektroden (4) und Erfassungselektroden (5) verbunden ist, Mittel (6), um den Sensor derart anzuregen, dass er eine Schwingung erzeugt, **dadurch gekennzeichnet, dass** sie Mittel umfasst, um eine Ermittlung (9) der Drehgeschwindigkeit des Sensors für jede von N Positionen der Schwingung gegenüber den Elektroden durchzuführen, wobei die Positionen geometrisch um einen vorgegebenen Winkel versetzt sind, Mittel zum Anwenden von Präzessionssteuerungen (10), indem ein vorher festgelegter Skalenfaktor verwendet wird, bis die Schwingung jede der N Positionen erreicht, und Mittel zum Bilden eines Mittelwertes (15) aus den Ermittlungen der Drehgeschwindigkeit des Sensors in den N Positionen der Schwingung, wobei die Anzahl N von Positionen und der Winkel, der die Positionen trennt, derart sind, dass durch den Mittelwert der Ermittlungen es erlaubt, mindestens eine Komponente des Driftfehlers der Harmonischen der Schwingung zu eliminieren.

10. Vorrichtung nach Anspruch 9, wobei die Winkelabstände zwischen den Positionen mit der Anzahl N von Positionen und mit der n-ten Ordnung der modalen Verformung der Schwingung gemäß der Formel in Zusammenhang stehen: Winkelabstand zwischen den Positionen = 2π/N$n$.

11. Vorrichtung nach Anspruch 10, wobei die Ermittlung für zwei Positionen durchgeführt wird, nämlich einer ersten Position ($\Theta$0) und einer zweiten Position, die gegenüber der ersten Position um n/n versetzt ist.

12. Vorrichtung nach Anspruch 11, wobei die Ermittlung für zwei zusätzliche Positionen durchgeführt wird, die gegenüber der ersten Position um π/2$n$ und 3π/2$n$ versetzt sind.

13. Vorrichtung nach Anspruch 12, wobei die Ermittlung für drei Positionen durchgeführt wird, nämlich einer ersten Position (θ0) und einer zweiten und dritten Position, die gegenüber der ersten Position um 3π/2n bzw. 4π/3$n$ versetzt sind.

14. Vorrichtung nach Anspruch 9, **dadurch gekennzeichnet, dass** sie umfasst:

   - Mittel zum Durchführen eines Vergleichs (22) zwischen jeder Präzessionssteuerung und einer entsprechenden Ist-Winkelveränderung,
   - und Mittel zum Herleiten eines aktualisierten Wertes (23) des Ska lenfa ktors.

15. Vorrichtung nach Anspruch 9, **dadurch gekennzeichnet, dass** sie umfasst:

   - Mittel (19) zum Messen der Veränderungen der Drehgeschwindigkeit des Sensors und
   - Mittel zum Durchführen einer algebraischen Deduktion der Veränderungen, die beim Bilden des Mittelwerts der Drehgeschwindigkeitsermittlungen gemessen werden.

**Claims**

1. A method of determining a speed of rotation of an axially symmetrical vibrating sensor (7) having a vibrating member (1) associated with control electrodes (4) and detection electrodes (5) to generate vibration presenting deformation that possesses periodicity of order $\underline{n}$ and that has a position ($\theta$) that is variable as a function of the rotation of the sensor, the method being **characterized in that** it comprises the following steps:

   · evaluating the speed of rotation in succession at a number N of positions of the vibration relative to the electrodes, the positions being geometrically offset through a predetermined angle and the vibration being moved from one position to another by applying a precession command while using a pre-established scale factor; and
   · taking the average (15) of the speeds of rotation as evaluated in the N positions;

   the number N of positions and the angle between the positions being such that averaging the evaluations serves to eliminate at least one component of the harmonic drift error of the vibration.

2. A method according to claim 1, wherein the angular differences between the positions are associated with the number N of positions and with the order $\underline{n}$ of the modal deformation of the vibration in application of the formula:

$$\texttt{angular position between the positions = } 2\pi/Nn$$

3. A method according to claim 1, wherein the speed is evaluated for two positions of the vibration, a first position ($\theta$0) and a second position that is offset by an angle $\pi/n$ relative to the first position.

4. A method according to claim 2, wherein the speed is evaluated for two additional vibration positions, i.e. positions that are geometrically offset by $\pi/2n$ and by $3\pi/2n$ relative to the first position.

5. A method according to claim 1, wherein the speed is evaluated for three positions of the vibration, i.e. a first position ($\theta$0), a second position offset by an angle $2\pi/3n$ relative to the first position, and a third position offset by $4\pi/3n$ relative to the first position.

6. A method according to all or some of the preceding claims, the method being **characterized in that** it includes the prior step of causing the positioning of the vibration to take up angles that are selected so that a corresponding detection signal has a non-zero value.

7. A method according to all or some of the preceding claims, the method being **characterized in that** it includes the following steps:

   · comparing (22) the precession command and an actual corresponding angle; and
   · deducing therefrom an updated value (23) for the scale factor.

8. A method according to all or some of the preceding claims, **characterized in that** it includes the steps of:

   · measuring (18) variations in the speed of rotation of the sensor; and
   · making an algebraic deduction from the variations measured while establishing the average of the evaluated speeds of rotation.

9. An inertial device comprising an axially symmetrical vibrating sensor (7), having a vibrating member (1) associated with control electrodes (4) and with detection electrodes (5), and means (6) for exciting the sensor so as to generate vibration, the device being **characterized in that** it includes means (9) for evaluating the speed of rotation of the sensor at each of N positions of the vibration relative to the electrodes, the positions being geometrically offset through a predetermined angle, means for applying precession commands (10) using a pre-established scale factor until the vibration reaches each of the N positions, and means (15) for taking the average between the evaluated speeds of rotation of the sensor in the N positions of the vibration, the number N of positions and the angle between the positions being such that averaging the evaluations serves to eliminate at least one component of the harmonic drift error of the vibration.

10. A device according to claim 9, wherein the angular differences between the positions are associated with the number N of positions and with the order $\underline{n}$ of the modal deformation of the vibration in application of the formula: angular position between the positions = $2\pi/Nn$

11. A device according to claim 10, wherein the evaluation is performed in two positions, a first position ($\theta 0$) and a second position that is offset by $\pi/n$ relative to the first position.

12. A device according to claim 11, wherein the evaluation is performed for two additional positions that are offset by $\pi/2n$ and $3\pi/2n$ relative to the first position.

13. A device according to claim 12, wherein the evaluation is performed for three positions, namely a first position ($\theta 0$) and second and third positions that are offset respectively by $3\pi/2n$ and by $4\pi/3n$ relative to the third position.

14. A device according to claim 9, **characterized in that** it includes:

 · means (22) for comparing each precession command with a corresponding actual variation of angle; and
 · means (23) for deducing an updated value for the scale factor.

15. A device according to claim 9, **characterized in that** it includes:

 · means (19) for measuring variations in the speed of rotation of the sensor; and
 · means for performing an algebraic deduction from the variations measured during the taking of the mean of the evaluated speeds of rotation.

FIG.1

UNITE COMMANDE ET DETECTION

FIG.2

| POSITIONNEMENT VIBRATION POSITION θ0 | i=0 |
|---|---|

8

EVALUATION VITESSE DE ROTATION CAPTEUR

9

i = i+1

10

POSITIONNEMENT VIBRATION θi = θ0+iπ/2n

COMPARAISON ENTRE COMMANDE PRECESSION ET VARIATION POSITION VIBRATION

22

EVALUATION VITESSE DE ROTATION CAPTEUR

13

NON

i = 3

OUI

CALCUL FACTEUR ECHELLE ACTUALISE

23

MESURE VARIATIONS VITESSE DE ROTATION PORTEUR

18

MOYENNE EVALUATION VITESSE DE ROTATION

15

20

COMPARAISON AVEC ROTATION ELEMENT PORTEUR

DETERMINATION ORIENTATION CAPTEUR

21

## FIG.3

## FIG.4

A

A20  H2

A40  H4

A42

θ1 θ4  θ5  A23

0  θ0  θ2  θ3  θ

A41  A44  A24  A25  A43

A22

## FIG.5

17  1

16

## RÉFÉRENCES CITÉES DANS LA DESCRIPTION

**Documents brevets cités dans la description**

- EP 1445580 A
- US 5712427 A
- EP 0810418 A
- FR 2755227